Europäisches Patentamt

European Patent Office

Office européen des brevets

(19)

(11) Publication number : **0 315 594 B1**

# (12) EUROPEAN PATENT SPECIFICATION

(45) Date of publication of patent specification :
20.05.92 Bulletin 92/21

(51) Int. Cl.⁵ : **A01B 59/041**

(21) Application number : **88830441.7**

(22) Date of filing : **25.10.88**

(54) **A device for regulating the lateral pivoting of the arms of an attachment for agricultural tractors.**

(30) Priority : **02.11.87 IT 6792587**

(43) Date of publication of application :
**10.05.89 Bulletin 89/19**

(45) Publication of the grant of the patent :
**20.05.92 Bulletin 92/21**

(84) Designated Contracting States :
**AT CH DE ES FR GB LI**

(56) References cited :
**DE-A- 3 333 416**
**DE-B- 1 179 030**
**FR-A- 2 126 912**
**GB-A- 678 841**

(73) Proprietor : **SAME S.p.A.**
**Viale F. Cassani, 14**
**I-24047 Treviglio Bergamo (IT)**

(72) Inventor : **Sala, Angelo**
**c/o SAME S.p.A Viale F. Cassani, 14**
**I-24047 Treviglio (IT)**
Inventor : **Martinetti, Aldo**
**c/o SAME S.p.A Viale F. Cassani, 14**
**I-24047 Treviglio (IT)**

(74) Representative : **Buzzi, Franco et al**
**c/o Jacobacci-Casetta & Perani S.p.A. Via**
**Alfieri, 17**
**I-10121 Torino (IT)**

EP 0 315 594 B1

## Description

The present invention relates in general to agricultural tractors having a linkage of the type including two lifting arms, articulated at one end to the structure of the tractor by means of respective ball joints which enable the arms to pivot sideways.

This sideways pivoting is necessary to enable the implements used on the arms to adapt during working to unevenness of the ground, without the risk of adversely affecting the integrity and effectiveness of the linkage. On the other hand, in some situations, for example when the tractor is travelling on the road with the implement raised, pivoting is unnecessary and may even be dangerous.

For this reason, means are normally provided for regulating the extent of the sideways pivoting of the arms of the linkage such that lateral play of the arms can be reduced or even eliminated in situations in which it is not necessary.

Currently-known regulating systems generally provide for the use of independent devices fitted separately to the two arms, or a single device which acts simultaneously on the two arms. In both cases the systems are generally complicated and not very functional, particularly as regards accessibility and manoeuvrability.

A system of the second type is disclosed in FR-A-2126912, wherein the regulating means include an axially extensible and contractible transverse strut which extends between the lifting arms and comprises a hollow shaft rotatably supported by the structure of the tractor and having two opposed internal screw threads in which two screws are engaged, so as rotation of the hollow shaft causes axial extension and contraction of said transverse strut, and two shoe members articulated to the structure of the tractor and interposed between the screws and the lifting arms. Each shoe member comprises a straight plate having its forward end articulated to the structure of the tractor and carrying at its rear end a cylindrical rod reacting against the respective lifting arm. Such a rod is offset rearwardly with respect to the axis or line of action of the transverse strut, and the plate is further articulated, by means of lateral hollow appendages, to an eyelet formed at the free end of the respective screw.

With such a construction, the application of the reaction force between the transverse strut and each of the lifting arms is concentrated along one generating line of the low-radius rod carried by the respective plate of the shoe, offset from the respective screw and thus from the axis of the strut. This may give raise to bending stresses on the plates with the risk of early wear and even breaking thereof, as well as to localized deformation of the associated lifting arms. Moreover, the width bulk of the regulating means is relevant and incompatible with the overall transverse dimensions of narrow tractors, such as those designed for vineyard farming.

On the other hand, this construction is relatively complicated, since each shoe with the associated articulations involves several components. Lastly, operation of the regulating device requires stop of the tractor and uncomfortable direct manoeuvre of the rotatable hollow shaft.

The object of the present invention is to avoid the above problems and to produce a device for regulating the sideways pivoting of the arms of a linkage for agricultural tractors of the type defined at the beginning, which is simple and functional and can be operated conveniently and easily.

According to the invention, this object is achieved by virtue of the features set forth in the characterising portion of Claim 1.

By virtue of this concept, the pivoting of the arms can be regulated quickly and easily whatever the position of the implement which, in any case, is always centred automatically relative to the tractor by the transverse strut.

The invention will now be described in detail with reference to the appended drawings, provided purely by way of non-limiting example, in which:

Figure 1 is a schematic plan view from above showing part of an agricultural tractor provided with a regulating device according to the invention, and

Figure 2 is a section taken on the line II-II of Figure 1 on an enlarged sclae.

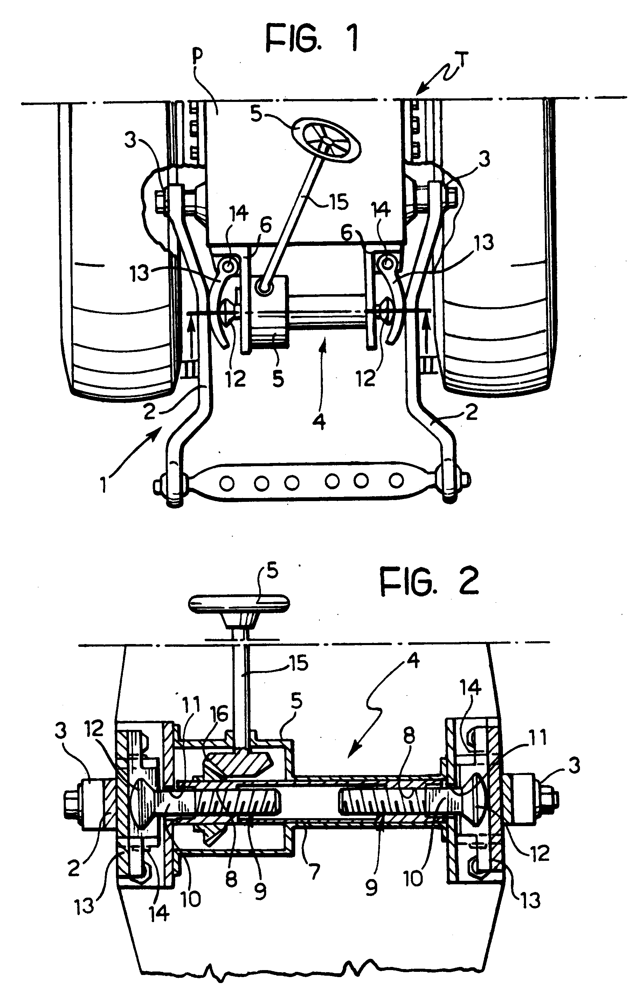

With reference initially to Figure 1, an agricultural tractor, indicated T, has a driving position, schematically indicated P, and is provided at its rear end with a three-point linkage, part of which is indicated 1.

The linkage 1, in generally known manner, includes two lifting arms 2 which are articulated at their front ends to the structure of the tractor T by means of respective ball joints 3 and are adapted for attachment of an agricultural implement at the rear.

The ball joints 3 normally enable the lifting arms 2 to pivot sideways in order to enable the necessary adaptation of the implement to unevenness of the ground.

According to the invention, the extent of this pivoting can be regulated by means of a regulating device 4 which can be operated manually from the driving position P of the tractor T by means of a control wheel 5.

With reference in greater detail to Figure 2, the regulating device 4 comprises essentially a casing 5 which extends horizontally between the two lifting arms 2 and is fixed rigidly to the structure of the tractor T by means of brackets 6.

A hollow shaft 7 is rotatable in the casing 5 and has two internal, opposed screw threads at its ends engaged by two screws 9 which can slide axially but cannot rotate relative to the shaft 7. In the embodiment illustrated, the two screws 9 are locked against rotation by means of prismaticend portions 10 thereof which are slidable through corresponding complementary apertures 11 in the two brackets 6.

The outer ends of the two screws 9 are formed as heads 12 with spherical surfaces which bear against respective pivoted shoes 13 in the form of arcuate segments, which are articulated to the structure of the tractor T about respective vertical pins 14 and react against the two lifting arms 2.

The control wheel 5 is operable to rotate the hollow shaft 7 through a shaft 15, which penetrates the casing 5, and a pair of bevel gears 16.

In use, the rotation of the wheel 5 and the consequent rotation of the hollow shaft 7 causes the two screws 9 to move axially towards and away from each other and consequently, by means of the pivoted shoes 13, causes the two lifting arms 2 to move towards or away from each other. The condition of minimum projection of the screws 9 from the casing 5 corresponds to the greatest freedom of pivoting of the arms 2 about the ball joints 3, whilst the condition of maximum projection of the screws 9 in practice corresponds to the elimination of the pivoting clearance, and hence the almost rigid locking of the arms 2 to the structure of the tractor T. The intermediate configurations, which can easily and conveniently be achieved by means of the wheel 5, obviously correspond to intermediate situations with a progressively variable pivoting cleances.

It is clear from the above that the regulating device 4 according to the invention can be operated immediately and easily without the need to remove the implement and whatever the position of the implement. Moreover, by virtue of the arrangement of the device 4, the tool itself is always centred automatically relative to the tractor T.

## Claims

1. A tractor comprising a linkage (1) including two lifting arms (2) articulated at one end to the structure of the tractor by means of respective ball joints (3) which enable the arms to pivot sideways, and means for regulating the extent of the pivoting including an axially extensible and contractible transverse strut (4) which extends between the lifting arms (2) and comprises a hollow shaft (7) rotatably supported by the structure of the tractor (T) and having two opposed internal screw threads (8) in which two screws (9) are engaged so as rotation of the hollow shaft (7) causes axial extension and contraction of said transverse strut (4), and two shoe members (13) articulated to the structure of the tractor and interposed between the screws (9) and the lifting arms (2), characterised in that it includes an actuating means (5) which can be operated from the driving position of the tractor (T) for rotating the said hollow shaft (7), and in that the said shoe members are formed by two arcuate segments (13) each having its convex side freely bearing against the respective lifting arm (2) and its concave side freely bearing against the respective screw (9).

2. A tractor according to claim 1, characterised in that the screws (9) have respective heads (12) with spherical surfaces which bear against the respective arcuate shoes (13).

3. A tractor according to claim 1 or claim 2, characterised in that the means comprise a geared transmission (16) driven by a shaft (15) rotatable by means of an operating hand wheel (5).

## Patentansprüche

1. Trecker, der eine Aufhängung (1) besitzt, die zwei Hebearme (2), die an einem Ende am Aufbau des Treckers mit Kugelgelenken (3) befestigt sind, mit denen die Arme seitwarts verschwenkt werden können, sowie eine Einrichtung aufweist, umd die Größe Verschwenkung zu regeln, wobei die Einrichtung eine axial ausfahrbare und einziehbare Querstrebe (4) aufweist, die zwischen den Hebearmen (2) verläuft und eine Hohlwelle (7) enthält, die im Aufbau des Treckers (T) drehbar gelagert ist und zwei gegenläufige Innengewinde (8) besitzt, in die zwei Schrauben (9) so eingreifen, daß eine Drehung der Hohlwelle (7) eine axiale Verlängerung oder Verkürzung der Querstrebe (4) hervorruft, sowie zwei Schuhelemente (13) besitzt, die am Aufbau des Treckers gelenkig gelagert sind und zwischen den Schrauben (9) und den Hebearmen (2) liegen, dadurch gekennzeichnet, daß die Regelvorrichtung eine Betätigungseinrichtung (5) aufweist, die vom Führerstand des Treckers (T) betätgit werden kann, um die Hohlwelle (7) in Drehung zu versetzen, und daß die Schuhelemente von zwei Bogensegmenten (13) gebildet werden, von denen jedes eine konvexe Seite, die frei am entsprechenden Hebearm (2) aufliegt, sowie eine konkave Seite besitzt, die frei auf der entsprechenden Schraube (9) aufliegt.

2. Trecker gemäß Anspruch 1, dadurch gekennzeichnet, daß die Schrauben (9) entsprechende Köpfe (12) mit Kugelflächen besitzen, die auf den entsprechenden gebogenen Schuhen (13) aufliegen.

3. Trecker gemäß Anspruch 1 oder 2, dadurch gekennzeichnet, daß die Betätigungseinrichtung eine Zahnradübertragung (16) enthält, die von einer Welle (15) angetrieben wird, die mit einem Handrad (5) in Drehung versetzt werden kann.

## Revendications

1. Tracteur comportant un attelage (1) qui comporte deux bras de levage (2) articulés, à une première extrémité, sur la structure du tracteur par des joints respectifs à rotule (3) qui permettent un pivotement latéral des bras, et un dispositif de réglage de l'amplitude du pivotement, comprenant une traverse (4) qui peut s'allonger et se contracter axialement, qui est placée entre les bras de levage (2) et qui comporte un arbre creux (7) supporté par la structure du tracteur (T) de manière qu'il puisse tourner et ayant deux taraudages opposés (8) dans lesquels sont placées deux vis (9) de manière que la rotation de l'arbre creux (7) provoque un allongement axial et une contraction axiale de la traverse (4), et deux patins (13) articulés sur la structure du tracteur et placés entre les vis (9) et les bras de levage (2), caractérisé en ce qu'il comporte un dispositif de manoeuvre (5) qui peut être manoeuvré depuis la position de conduite du tracteur (T) et qui est destiné à faire tourner l'arbre creux (7), et en ce que les patins sont formés par deux segments courbes (13) ayant chacun sa face convexe qui est en appui contre le bras respectif de levage (2) et dont la face concave est en appui contre la vis respective (9).

2. Tracteur selon la revendication 1, caractérisé en ce que les vis (9) ont des têtes respectives (12) qui ont des surfaces sphériques qui sont en appui contre les patins courbes respectifs (13).

3. Tracteur selon la revendication 1 ou 2, caractérisé en ce que le dispositif de manoeuvre comporte une transmission (16) à engrenage entraînée par un arbre (15) qui peut être tourné par un volant de manoeuvre (5).

# FIG. 1

# FIG. 2